# EUROPEAN PATENT SPECIFICATION

(11) **EP 3 394 433 B1**
(45) Date of publication and mention of the grant of the patent: **18.08.2021**
(21) Application number: 16757719.6
(22) Date of filing: 29.06.2016
(51) Int. Cl.: F03D 3/04, F03D 9/45, F03D 9/37, F03D 9/00, F03G 6/04

(54) **SYSTEM FOR RECOVERING ENERGY FROM RENEWABLE SOURCES**
SYSTEM ZUR RÜCKGEWINNUNG VON ENERGIE AUS ERNEUERBAREN QUELLEN
SYSTÈME POUR RÉCUPÉRER DE L'ÉNERGIE À PARTIR DE SOURCES RENOUVELABLES

(30) Priority: 29.06.2015 IT UB20151742
(43) Date of publication of application: 31.10.2018
(73) Proprietor: Mediterranean Design Network S.r.l., 90133 Palermo (IT)
(72) Inventor: DE LUCA, Marcello, 90133 Palermo (IT); SAPORITO, Antonio, Palermo (IT)
(74) Representative: Maiello, Helenio Francesco
(86) International application number: PCT/IB2016/053888
(87) International publication number: WO 2017/002036

(56) References cited:
- FR-A1- 2 472 093
- US-A- 4 122 675
- US-A1- 2013 017 063

## Description

### Technical Field

The present invention finds application in the field of devices for the recovery of energy from renewable sources and particularly relates to a system for energy recovery from renewable sources that includes a turbine adapted to convert the energy taken from other sources into electrical or mechanical energy, preferably renewable type.

### State of the art

As known, today there is an increasing search for new solutions allowing the renewable energy to be used in a more efficient and economical way not only in industry but also in domestic environments or small environments.

In particular, new micro-wind turbines solutions have been recently developed, i.e, small wind turbines installed directly on buildings, even for civil use, for producing output of a some kWh. However, the known solutions do not allow to integrate as effectively as possible different devices operating by different energy sources so as to maximize efficiency thereof.

In particular, the use of microwind turbines is still not profitable because of low yields of these devices.

Still in the field of civil building, it is also known the use of ventilated walls, i.e. building structures designed to be applied to the facades of buildings to coat the same and create a space between the structure and the facade adapted either to promote convective motion of air, resulting in moisture removal, and to increase the thermal and/or acoustic insulation of the building.

Generally, a ventilated wall is formed by an anchoring structure to be fixed to the facade of the building by means of suitable brackets and from an outer coating having even aesthetical function.

However, the known ventilated facades are primarily passive elements for energy production and does not allow to take advantage of the energy associated with the convection streams that are generated thereinto.

Therefore, there is the need for a system that allows to maximize the recovery of energy from renewable sources.

In particular, there is the need for similar systems that are also advantageously applicable to civil buildings, for example in an integrated manner with a ventilated wall in order to be used as an active element of an energy recovery system having low aesthetic impact and adapted also to be used only with renewable energy sources to ensure high energy autonomy of the building which it is applied to. US4122675 discloses a building comprising a wind turbine. US6201313 discloses an energy recovery system adapted to be installed on a building and that use the heat produced by a solar panel to power a turbine arranged in the interspace formed between the solar panel and a wall or roof of the building.

However, this solution thus configured cannot be used to produce satisfactory powers because the heated air flow is not channeled but undergoes strong dispersions.

### Scope of the invention

The object of the present invention is to overcome the drawbacks mentioned above, realizing an energy recovery system from renewable sources that present features of high efficiency and relative cheapness.

A particular object is to provide an energy recovery system from renewable sources that integrates various devices for the production of energy operating with different sources and which maximizes the yield thereof.

One further object is to provide an energy recovery system from renewable sources that can be integrated with the structure of a building in order to increase the efficiency and energy autonomy of the building to which it is applied.

Still another object is to provide an energy recovery system from renewable sources that uses a micro wind turbine maximizing the yield thereof.

One further object is to provide an energy recovery system from renewable sources that integrates a ventilated wall so as to make it an active element in energy production and that can thus be associated to the building structure to have low aesthetic impact.

These objects, as well as others which will become more apparent hereinafter, are achieved by an energy recovery system from renewable sources that, according to claim 1, comprises a first conduit for the flow of a working fluid, heating means of the fluid in said first conduit adapted to promote the flow thereinside, a wind turbine having a conveyor in fluid communication with said first conduit and an impeller adapted to be connected to the electric power generation means for receiving the flow sent from said first conduit and cut from said conveyor to operate said generating means.

This combination of features will enable the system to use the wind turbine in an optimal way, maximizing the efficiency thereof. The impeller has one or more blades adapted to move between a thrust position and a return position upon rotation of said impeller, said conveyor having a flow emitting mouth, preferably but not exclusively air, in a position facing the blade in said thrust position and a side wall that at least partially surrounds said impeller.

In this way the efficiency of the wall will be maximized as the flow will be guided towards the impeller of the turbine to avoid dispersions.

The turbine comprises a flow diverter which extends from an inlet section facing to one or more blades in said return position to an exit section facing to one or more blades in said thrust position and in fluid communication with said conveyor to return at least partially the working fluid toward the latter and increase the torque produced by the flow on said impeller.

Thanks to this combination of features the fluid rejected by the blade in the return position will be recovered at least in part to be brought at least partially towards the blade in the thrust position to increase the torque produced by the flow on the impeller.

The flow diverter is divided into a plurality of return ducts substantially curvilinear and mutually side by side so as to reduce turbulence phenomena inside the deflector and increase the output speed of the fluid from each duct.

Conveniently, said heating means may comprise a heating device operating with a renewable energy source, such as a solar thermal device, a solar concentration device or the like, having a second conduit for the circulation of a heating fluid fluidically connected with said first duct. Further, the heating means may also comprise a heat exchanger having a primary circuit fluidically connected to said first conduit and a secondary circuit fluidically connected to said second conduit.

This will make it possible to obtain a greater flow rate of fluid toward the turbine, increasing the efficiency of the whole system.

Furthermore, it will make the whole system completely self-sufficient from an energy point of view and free of polluting emissions.

In a particular embodiment, the system may comprise a ventilated wall having an anchoring structure adapted to be fixed to a facade of a building and a coating fixed to said anchoring structure at a predetermined distance from the facade to define therewith a gap having an upper edge at least partially open, said first conduit being housed in the gap or defined by said gap. Suitably, said heat exchanger may be located at the base of said gap, while the heating device may be fixed on the roof or on any other wall of the building, for example at the base, or even far from the building.

Thanks to this particular combination of features it will be possible both to recover the kinetic energy associated with the convective air flows generated inside the duct to generate energy through the turbine, or to integrate the system with the ventilated wall, possibly thereinside, transforming it into an active element from an energy point of view.

The conveyor of said wind turbine may be in fluid communication with said gap for receiving a flow of air raising said gap and sending it to said impeller.

In particular, the conveyor may be defined by a curvilinear end extension of said coating that extends beyond said upper edge of said gap.

In this way there will be a structural continuity between the coating and the conveyor, with benefits both in terms of performance and aesthetic impact, since the turbine will be integrated in the wall.

Advantageous embodiments of the invention are obtained in accordance with the dependent claims.

### Brief disclosure of the drawings

Further features and advantages of the invention will become more apparent in light of the detailed description of some preferred but not exclusive embodiments of a system according to the invention, illustrated by way of non-limiting example with the aid of the accompanying drawing tables wherein:
**FIG. 1** is a schematic view of a system according to the invention in a first preferred embodiment;
**FIG. 2** is a view in detail of the system of Fig. 1 which shows the turbine illustrated in section according to a first preferred but not exclusive embodiment;
**FIG. 3** is a schematic view of the system in a second embodiment integrating a ventilated wall;
**FIG. 4** shows a schematic view of a second preferred configuration of a turbine adapted to be applied to the system;
**FIG. 5** shows some views of a third preferred configuration of a turbine adapted to be applied to the system;
**FIG. 6** is a schematic front view of a fourth preferred configuration of a turbine adapted to be applied to the system;
**FIG. 7** is a top view of the turbine of Fig. 6.

### Best modes of carrying out the invention

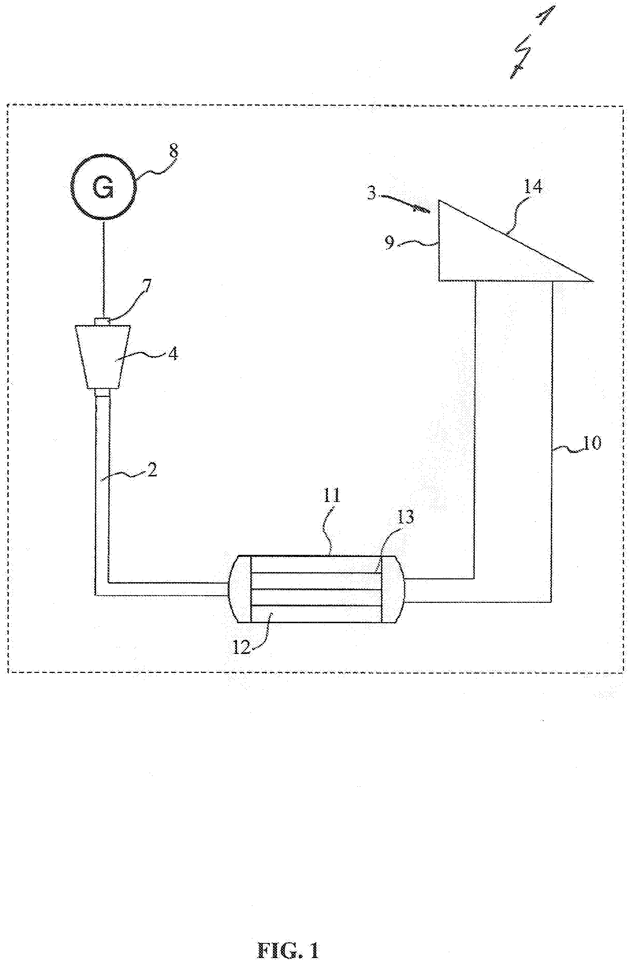

**Fig. 1** shows a schematic embodiment, preferred but not exclusive, of a system for recovering energy from renewable sources according to the invention that may autonomously used or in association to a building, either for civil or industrial or commercial use, in order to transform the inlet energy into electrical or mechanical energy through one or more devices powered with energy sources of renewable type.

As will become more clear from the following description, the system may assume different configurations depending on the available space, on the devices used and on the purpose without particular limitations.

In particular, the system **1** according to the invention may be integrated within water pipelines for mini- or micro-hydric applications.

In its most basic form, the system, generally designated by **1**, comprises a first conduit **2** for the flow of a working fluid, for example air or other gas or mixture of gases, or water or other liquid, heating means **3** of the fluid within the first conduit **2** adapted to promote the flow thereinside, and a turbine **4** having a conveyor **5** in fluid communication with the first conduit **2** and an impeller **6** adapted to receive the flow from the first conduit **2** intercepted by the conveyor **5.**

In a known manner the impeller **6** will have a rotation shaft **7** operatively coupled to means for generating electrical or mechanical energy **8**, not described in detail since of per se known type, which will be operated by the rotation of the impeller **6** triggered by the flow coming from the conveyor **5.**

The heating means **3** comprise a heating device **9** having a second conduit **10** for the circulation of a second heating fluid fluidically connected to the first conduit **2.**

The heating device **9** is suitably connected to a heat exchanger **11** positioned upstream of the turbine **4** with respect to fluid flow and having a primary circuit **12** fluidically connected to the first conduit **2** and a secondary circuit **13** fluidically connected to the second conduit **10.**

The heat exchanger **11**, simply schematized in the figure, may be selected between those commonly available on the market, without particular limitations, and in particular may be of the coil type.

In a particular variant, not shown, the primary circuit **12** may be connected to a hydraulic circuit of a building served by the system wherein there will be a flow of hot water heated by an appropriate burner, or it may be provided with its own burner.

Preferably, the heating means **3** of the fluid flowing in the heat exchanger **11** will be selected between the devices operating with renewable energy sources.

In preferred manner, the heating means **3** comprise a common solar thermal device **14** adapted to be installed on a building, either on the roof or on a facade, or fixed to a support structure, also far away from the building or from the consumption served by the system, or arranged externally to the pipe in the case of hydraulic applications.

The solar device **14** will have a circulation duct **10** of the heating fluid fluidically connected to the primary circuit **12** of the exchanger **11.**

The solar device **14** may also be of the heat storage type so as to store thermal energy thereinside to be released at a later time depending on the needs.

According to a not illustrated variant, the solar device **14** may be of the concentration type or the like.

The first conduit **2** arranged to convey the air, water or another heated fluid towards the turbine **4** may have any shape, for example with circular or rectangular cross section, and may be open or closed.

The heat exchanger **11** will generally be arranged at the base of the first conduit **2** or in any case upstream of the turbine **4** and will be possibly provided with one or more fans, not shown, adapted to force the raising of the heated flow towards the conveyor **5.**

According to a not shown variant, the first conduit **2** may be divided into one or more shaped vertical conduits for accelerating the flow towards the conveyor **5**, for example with cross-section decreasing upwards to generate a Venturi effect.

Alternatively, the first conduit **2** may house thereinside such shaped conduits having an inlet section close to the heat exchanger **11** and an outlet section facing the inlet of the conveyor **5.** The conduits may have any sectional shape, for example circular or rectangular, and may also be insulated or perforated in correspondence of the heat exchanger **11.**

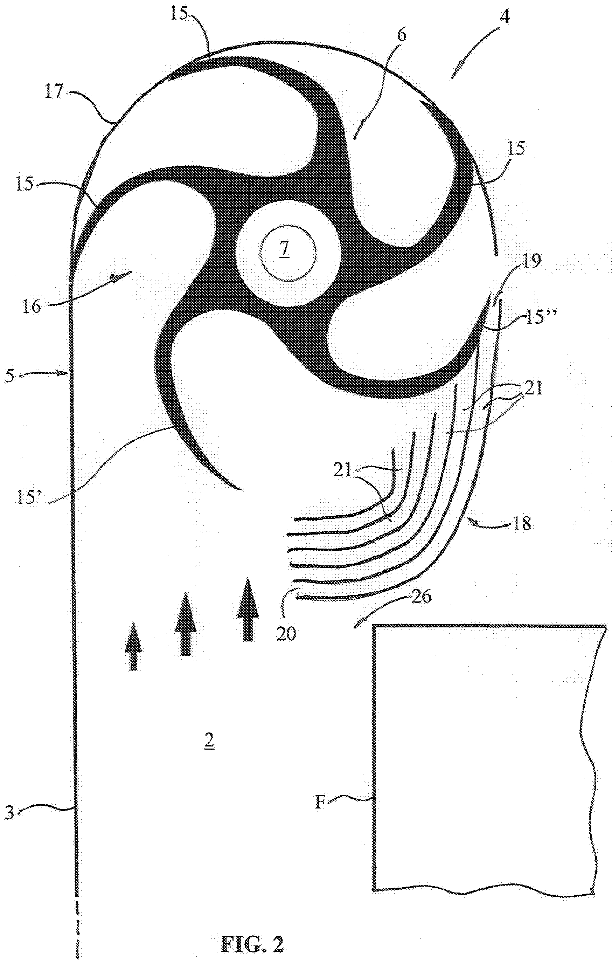

The turbine **4** may be any commercially available turbine and in a preferred but not exclusive embodiment will be of the type disclosed in the Italian patent application VI2013A000189 in the name of the same Applicant or more preferably according to any one of the configurations disclosed in the Italian patent application VI2014A000272, always in the name of the same Applicant, as shown in greater detail in **Fig.2****.**

From this figure it is observed that the impeller 6 comprises a plurality of blades **15** adapted to alternately move between a thrust position and a return position upon rotation of the impeller **6.**

In particular, the blades **15** are integral with each other to rotate unitarily following the action of the air flow so that from time to time at least one blade **15'** is in the thrusting position corresponding to the position in which it is facing the supplying mouth **16** of the conveyor **5** designed to the entrance of the fluid flow, to be invested by the flow (whose advancing direction is indicated by arrows). At the same time at least one other blade **15"** will be in return or advancing position.

The conveyor **5** has a side wall **17** which partially wraps around the impeller **6** and which may be defined by a first portion of the same first conduit **2,** for example by an extension of the ends thereof in the case in which the turbine **4** is placed outside the first conduit **2.**

The turbine **5** may also comprise a flow diverter **18** that extends from an inlet section **19** facing the blades **15"** in advancing position to an output section **20** facing to the blades **15'** in the thrust position and in fluid communication with the supplying mouth **16** of the conveyor **5,** to restore at least partially the working fluid toward the blades **15'** in the thrust position and increase the torque produced by the flow on the impeller **6.**

The flow diverter **18** is divided into a plurality of return ducts **21,** substantially curvilinear and mutually side by side.

The curvature radius of the return ducts **21** may have any values without particular limitations and is preferably not too narrow with angles at the center greater than 45° to avoid the occurrence of phenomena of compression of the fluid and consequent turbulent motion.

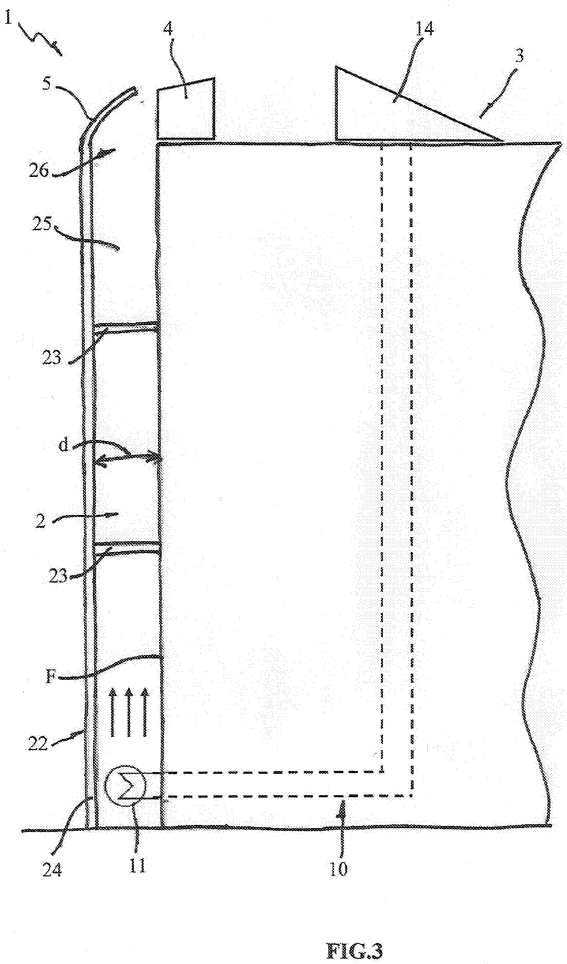

**Fig. 3** shows a further embodiment of the recovery system **1** that incorporates a ventilated wall **22** with energy recovery that may be applied to the façade **F** of any building, either of civil or commercial or industrial nature which, according to any installation methodology provided for common ventilated walls.

As schematically shown in this figure, in a known manner the energy recovery ventilated wall **22** comprises an anchoring structure **23** adapted to be secured to the facade **F** of the building and a coating **24** fixed to the anchoring structure **23** at a predetermined distance **d** from the facade **F** to define therewith a gap **25** having an upper edge **26** at least partially open.

Although in the figure the diverter **18** is illustrated in a position such as to define a light with the upper edge **26,** it may be arranged so as to occlude this light and if necessary may be disposed at least partially inside the gap **25.**

The technical features of the anchoring structure **23** and the coating **24** will not be described more in detail as it will be clear that they are not limiting for the scope of protection of the present invention and may be selected between the structures and coatings commonly used for the realization and installation of known ventilated walls.

In a first variant the same gap **25** will define the first conduit for the circulation of the heated fluid.

In this case, the upper open edge **26** of the gap **25** is connected to the wind turbine **4** having the conveyor **5** in fluid communication with the gap **25** itself. In this way the impeller **6** may receive an air flow raising along the gap **25** and intercepted by the conveyor **5** to be brought into rotation around its central axis.

The rotation of the impeller **6** operates the energy generation means **8** which may comprise an electric generator having a power shaft connected to the central axis of rotation **7** of the impeller **6.**

The turbine **4** may be dimensioned in function of the specific needs in terms of energy requirements, as well as the availability of space, and generally will be of the type suitable for micro-wind applications, and mini-water application with open channel.

For example, the turbine **4** may have a bearing frame to be fixed in a stable manner directly to the building or to the same anchoring structure **23** of the coating **24,** so that the impeller **6** has a horizontal central rotation axis.

In a particular embodiment the conveyor **5** will have a side wall **17** which partially wraps around the impeller **6** and which will be defined by an extension of the curvilinear ends of the coating **24** which extends beyond the upper edge **26** of the gap **25.**

In particular, the extension **17** may be unitary with the coating **24** or simply juxtaposed thereto by means of any type of connecting means to be in each case continuous therewith.

The extension **17** may extend only for part of the width of the coating **24,** normally corresponding to the width of the facade **F** of the building, or for the whole width.

In this case it will also be possible to install more wind turbines **4** independent of each other or fitted with impellers with common axis of rotation.

The heat exchanger **11** may be installed at the base of the gap **25** or at a different height, depending on the needs.

Suitably, the gap **25** or the possible conduit **2** will have at the base, in correspondence of the heat exchanger **11,** a slot to allow the creation of an air flow from outside toward the inside. According to a second variant, not shown, the gap **25** may be divided into one or more shaped vertical conduits to accelerate the flow of air towards the conveyor **5,** for example with a cross-section decreasing upwards to generate a Venturi effect.

According to yet another variant, the gap **25** may house thereinside the first conduit **2,** possibly divided in more shaped ducts having an inlet section close to the heat exchanger **11** and an outlet section facing the supplying mouth **16** of the conveyor **5.**

The ducts may have any sectional shape, for example circular or rectangular, and may also be insulated or perforated in correspondence of the heat exchanger **11.**

According to yet an alternative variant, one or more of the vertical ducts that branch off from the heat exchanger **11** may be at least partially external to the ventilated wall **22.**

The first conduit **2** for the circulation of hot air may be either open or closed, even with the ventilated wall **22.**

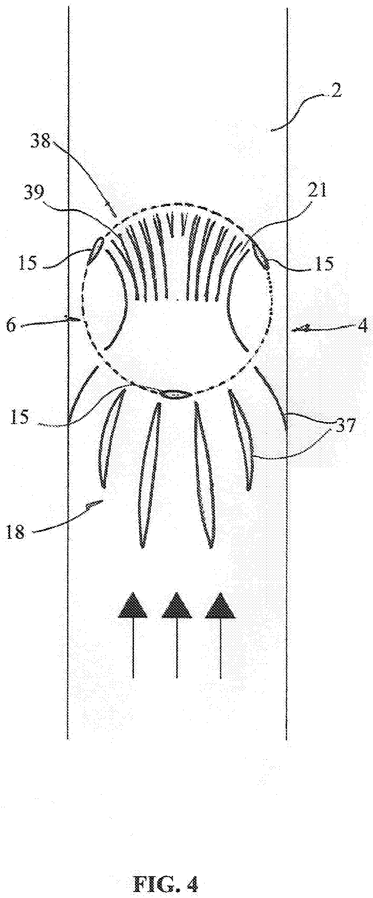

**Fig. 4** shows a second embodiment of the turbine **4** adapted to be inserted within the first conduit **2** and comprising an impeller **6** of the Darrieus type, or another vertical-axis turbine. The turbine **4** also comprises a plurality of first conveying profiles **37** arranged externally to the impeller **6** to accelerate the flow entering thereinto and to direct it towards the blades **15.**

A second diverter **38** is arranged internally to the impeller **6** and has a plurality of second conveyance profiles **39** that delimit substantially curvilinear ducts **21** for flow recovery adapted to intercept the flow-through and to convey it toward the blades **15,** thereby further increasing the yield.

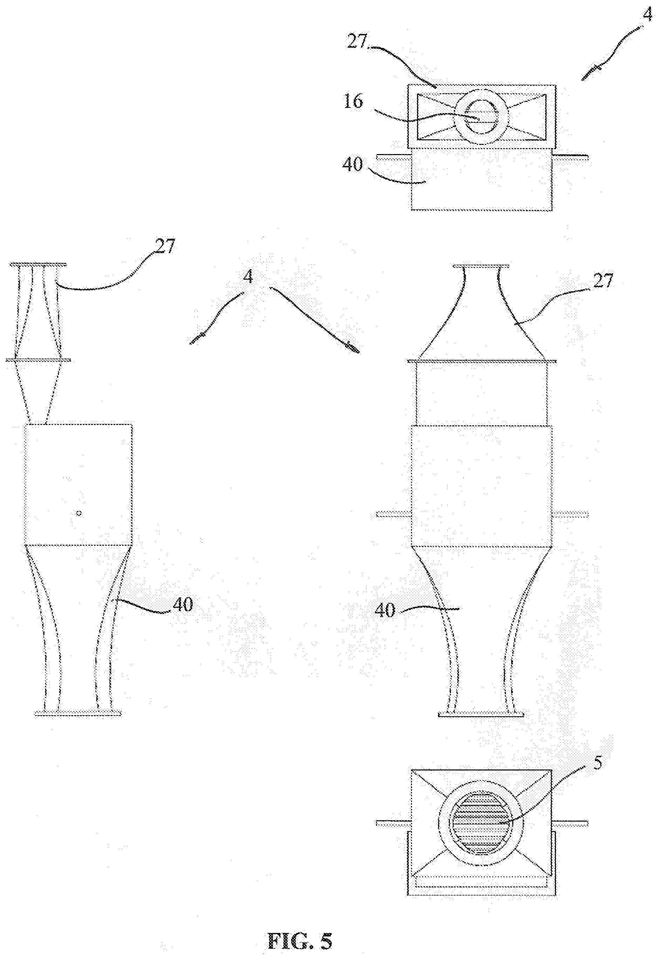

**Fig. 5** shows a third embodiment of the turbine **4** which essentially differs because it comprises a conveying duct **27** connected to the first conduit **2** upstream of the impeller **6** and designed to accelerate the flow entering the impeller **6,** with an inlet mouth of the flow facing the supplying mouth **16** of the conveyor **5** designed to supplying the fluid current.

When the system is applied to a water pipeline, the turbine **4** will also comprise an acceleration duct **40** connected to the first conduit **2** downstream of the impeller **6** and designed to accelerate the flow outcoming therefrom.

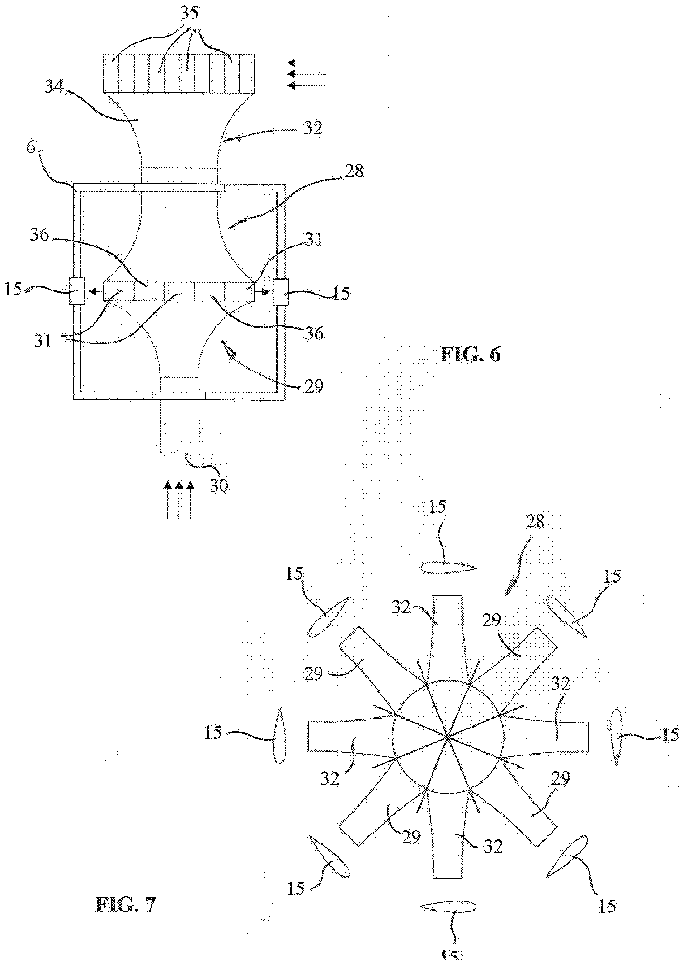

**Fig. 6** shows a fourth embodiment of a turbine **4** adapted to be applied to the system **1.**

The turbine **4** comprises a stator **28** having a plurality of first radial channels **29** for ejecting the flow, each having an inlet **30** connected to the first conduit **2** upstream of the stator **28** and an outlet **31** facing a respective blade **15** of the impeller **6.**

Furthermore, the stator **28** also comprises a plurality of second radial channels **32** connected to an auxiliary duct **34** open to the outside and having a plurality of inlets **35** for the entry of an air current, for example of the wind, and an output **36** facing a respective blade **15** of the impeller **6.**

Preferably, the inlets **35** will be transverse with respect to the air flow to be intercepted. According to the preferred but not exclusive embodiment of the figure the first radial channels **29** are alternated with second radial channel **32** and also the respective outputs **31, 36** are equally angularly spaced.

Moreover, the outputs **31, 36** of the first and second radial channels **29, 32** are facing respective blades **15** of the impeller **6** with such inclination as to produce a respective output fluid jet incident the respective blade with an angle between 80° and 100°

As visible from **Fig. 7****,** the turbine **4** will preferably be of the Darrieus type, or other turbine with vertical axis, with a plurality of blades **15** peripherally arranged about the stator **28.** However, it will be also possible to adopt different types of turbines.

In addition, it also appears evident that the turbine thus configured may also be used in systems different from the one object of the present invention because in any case will have the advantage of being able to recover energy from two different flows intercepted by the first radial channels **29** and the second radial channels **32.**

From above it is clear that the system according to the invention reaches the intended objects and in particular it recovers the energy associated with the convective motions created inside the heated fluid, being able to transform, in a particular configuration, the ventilated wall in an active power generation system.

Although the system has been described with particular reference to the attached figures, the reference numbers used in the description and in the claims are used to improve the intelligence of the invention and do not constitute any limitation to the scope of protection claimed.

## Claims

1. A system for recovering energy from renewable sources, comprising:
- a first conduit (**2**) for the flow of a working fluid;
- heating means (**3**) of said fluid in said first conduit (**2**) adapted to promote the flow thereinside;
- a turbine (**4**) having a conveyor (**5**) in fluid communication with said first conduit (**2**) and an impeller (**6**) adapted to be connected to generating means (**8**) for the generation of energy for receiving the flow sent by said first conduit (**2**) and intercepted by said conveyor (**5**) and operating said generating means (**8**);
wherein said impeller (**6**) has one or more blades (**15**) to move between a thrust position and a return position upon rotation of said impeller (**6**), said conveyor (**5**) having a supplying mouth (**16**) for the flow in a position facing the blade (**15'**) in said thrust position and a side wall (**17**) at least partially wrapping said impeller (**5**);
wherein said turbine (**4**) comprises a flow diverter (**18**) which extends from an input section (**19**) facing one or more blades (**15"**) in said return position to an output section (**20**) facing one or more blades (**15'**) in said thrust position and in fluid communication with said conveyor (**5**) to return at least partially the working fluid toward the latter and increase the torque produced by the flow on said impeller (**6**).
**characterized in that** said flow diverter (**18**) is divided into a plurality of return ducts (**21**) substantially curvilinear and in mutually side-by-side position.

2. System as claimed in any preceding claim, **characterized in that** said heating means (**3**) comprise a heater device (**9**) operating with a renewable energy source, such as a solar thermal device (**14**), a solar concentration device or the like, having a second conduit (**10**) for the circulation of a heating fluid fluidically connected to said first conduit (**2**).

3. System as claimed in claim 2, **characterized in that** said heating means (**3**) comprise a heat exchanger (**11**) having a primary circuit (**12**) fluidically connected to said first conduit (**2**) and a secondary circuit (**13**) fluidically connected to said second conduit (**10**).

4. System as claimed in claim 3, **characterized in that** said heat exchanger (**11**) is arranged upstream of said conveyor (**5**) with respect to the fluid flow.

5. System as claimed in any preceding claim, **characterized in that** said turbine (**4**) comprises a conveying duct (**40**) jointed to said first conduit (**2**) upstream of said impeller (**6**) and designed to speed up the flow entering said impeller (**6**).

6. System as claimed in claim 5, **characterized in that** said turbine (**4**) comprises an acceleration duct (**27**) jointed to said first conduit (**2**) downstream of said impeller (**6**) and designed to speed up the flow outcoming from said impeller (**6**).

7. System as claimed in any preceding claim, **characterized by** comprising a ventilated wall (**22**) having an anchoring structure (**23**) adapted to be secured to a facade (**F**) of a building and a coating (**24**) fixed to said anchoring structure (**23**) at a predetermined distance (**d**) from the facade (**F**) to define a gap (**25**) therewith, which gap (**25**) having an upper edge (**26**) at least partially open, said first conduit (**2**) being housed into or defined by said gap (**25**).

8. System as claimed in claim 7, **characterized in that** said conveyor (**5**) of said turbine (**4**) is in fluid communication with said gap (**25**) for receiving a flow of air raising thereinto and to be sent to said impeller (**6**).

9. System as claimed in claim 8, **characterized in that** said conveyor (**5**) is defined by an extension of the curvilinear end (**17**) of said coating (**24**) which extends beyond said upper edge (**26**) of said gap (**25**).

10. System as claimed in claim 3 in combination with-any preceding claim from 7 to 9, **characterized in that** said heat exchanger (**11**) is placed at the base of said gap (**25**) and is optionally provided with one or more fans adapted to force the rising of the heated air flow towards said conveyor (**5**).

## Patentansprüche

1. System zur rückgewinnung von energie aus erneuerbaren quellen, bestehend aus:
- eine erste Leitung (2) für den Fluss eines Arbeitsfluids;
- Heizmittel (3) des Fluids in der ersten Leitung (2), die geeignet sind, die Strömung darin zu fördern;
- eine Turbine (4) mit einem Förderer (5) in Fluidverbindung mit der ersten Leitung (2) und einem Laufrad (6), das mit einer Erzeugungseinrichtung (8) zur Erzeugung von Energie zum Empfangen der von der genannten Leitung gesandten Strömung verbunden werden kann eine erste Leitung (2), die von dem Förderer (5) abgefangen wird und die Erzeugungseinrichtung (8) betätigt;
wobei das Laufrad (6) eine oder mehrere Schaufeln (15) aufweist, die angepasst sind, um sich bei Drehung des Laufrads (6) zwischen einer Schubposition und einer Rücklaufposition zu bewegen, wobei der Förderer (5) eine Zuführungsöffnung (16) für den Fluss hat eine Position gegenüber der Schaufel (15') in der Schubposition und eine Seitenwand (17), die das Laufrad (5) zumindest teilweise umhüllt;
wobei die Turbine (4) einen Strömungsumlenker (18) umfasst, der sich von einem Eingangsabschnitt (19), der einer oder mehreren Schaufeln (15") zugewandt ist, in der Rückkchrposition zu einem Ausgangsabschnitt (20) erstreckt, der einer oder mehreren Schaufeln (15) zugewandt ist in der Schubposition und in Fluidverbindung mit dem Förderer (5), um das Arbeitsfluid zumindest teilweise zu diesem zurückzuführen und das durch die Strömung auf das Laufrad (6) erzeugte Drehmoment zu erhöhen.
**dadurch gekennzeichnet, dass** der Strömungsumlenker (18) in eine Vielzahl von Rückführkanälen (21) unterteilt ist, die im Wesentlichen krummlinig sind und sich nebeneinander befinden,

2. System nach einem der vorhergehenden Ansprüche, **dadurch gekennzeichnet, dass** die Heizmittel (3) eine Heizvorrichtung (9) umfassen, die mit einer erneuerbaren Energiequelle arbeitet, wie einer Solarthermievorrichtung (14), einer Solarkonzentrationsvorrichtung oder dergleichen, mit einer zweiten Leitung (10) zur Zirkulation eines Heizfluids, die fluidisch mit der ersten Leitung (2) verbunden ist.

3. System nach Anspruch 2, **dadurch gekennzeichnet, dass** die Heizmittel (3) einen Wärmetauscher (11) umfassen, der einen mit der ersten Leitung (2) fluidisch verbundenen Primärkreislauf (12) und einen fluidisch verbundenen Sekundärkreislauf (13) aufweist zu der zweiten Leitung (10).

4. System nach Anspruch 3, **dadurch gekennzeichnet, dass** der Wärmetauscher (11) bezüglich des Fluidstroms vor dem Förderer (5) angeordnet ist.

5. System nach einem der vorhergehenden Ansprüche, **dadurch gekennzeichnet, dass** die Turbine (4) einen Förderkanal (40) umfasst, der stromaufwärts des Laufrads (6) mit der ersten Leitung (2) verbunden ist und dazu bestimmt ist, die in das Laufrad eintretende Strömung zu beschleunigen (6).

6. System nach Anspruch 5, **dadurch gekennzeichnet, dass** die Turbine (4) einen Beschleunigungskanal (27) umfasst, der stromabwärts des Laufrads (6) mit der ersten Leitung (2) verbunden ist und dazu bestimmt ist, die aus dem Laufrad austretende Strömung zu beschleunigen (6).

7. System nach einem der vorhergehenden Ansprüche, **dadurch gekennzeichnet, dass** es eine belüftete Wand (22) mit einer Verankerungsstruktur (23), die an einer Fassade (F) eines Gebäudes befestigt werden kann, und einer an der Verankerungsstruktur befestigten Beschichtung (24) umfasst (23) in einem vorbestimmten Abstand (d) von der Fassade (F), um damit einen Spalt (25) zu definieren, wobei der Spalt (25) eine zumindest teilweise offene Oberkante (26) aufweist, wobei die erste Leitung (2) untergebracht ist in die Lücke (25) oder durch diese definiert wird.

8. System nach Anspruch 7, **dadurch gekennzeichnet, dass** der Förderer (5) der Turbine (4) in Fluidverbindung mit dem Spalt (25) steht, um einen Luftstrom aufzunehmen, der darin aufsteigt und dem Laufrad (6) zugeführt wird.

9. System nach Anspruch 8, **dadurch gekennzeichnet, dass** der Förderer (5) durch eine Verlängerung des krummlinigen Endes (17) der Beschichtung (24) definiert ist, die sich über die Oberkante (26) des Spaltes (25) hinaus erstreckt.

10. System nach Anspruch 3 in Kombination mit einem der vorhergehenden Ansprüche 7 bis 9, **dadurch gekennzeichnet, dass** der Wärmetauscher (11) an der Basis des Spaltes (25) platziert ist und optional mit einem oder mehreren Ventilatoren versehen ist, die angepasst sind das Aufsteigen des erwärmten Luftstroms in Richtung des Förderers (5) erzwingen.

## Revendications

1. Système pour récupérer de l'énergie à partir de sources renouvelables, comprenant:
- un premier conduit (2) pour l'écoulement d'un fluide moteur;
- des moyens de chauffage (3) dudit fluide dans ledit premier conduit (2) aptes à favoriser l'écoulement à l'intérieur de celui-ci ;
- une turbine (4) comportant un convoyeur (5) en communication fluidique avec ledit premier conduit (2) et une roue à aubes (6) adaptée pour être reliée à des moyens générateurs (8) de génération d'énergie pour recevoir le flux envoyé par ledit premier conduit (2) et intercepté par ledit convoyeur (5) et actionnant lesdits moyens générateurs (8) ;
dans lequel ladite roue à aubes (6) a une ou plusieurs pales (15) adaptées pour se déplacer entre une position de poussée et une position de retour lors de la rotation de ladite roue à aubes (6), ledit convoyeur (5) ayant une bouche d'alimentation (16) pour l'écoulement dans une position tournée vers la pale (15') dans ladite position de poussée et une paroi latérale (17) enveloppant au moins partiellement ladite roue à aubes (5) ;
dans lequel ladite turbine (4) comprend un déviateur de flux (18) qui s'étend d'une section d'entrée (19) faisant face à une ou plusieurs pales (15") dans ladite position de retour à une section de sortie (20) faisant face à une ou plusieurs pales (15') dans ladite position de poussée et en communication fluidique avec ledit convoyeur (5) pour renvoyer au moins partiellement le fluide de travail vers ce dernier et augmenter le couple produit par l'écoulement sur ladite roue à aubes (6).
**caractérisé en ce que** ledit déviateur de flux (18) est divisé en une pluralité de conduits de retour (21) sensiblement curvilignes et en position mutuellement côte à côte.

2. Système selon l'une quelconque des revendications précédentes, **caractérisé en ce que** lesdits moyens de chauffage (3) comprennent un dispositif de chauffage (9) fonctionnant avec une source d'énergie renouvelable, tel qu'un dispositif solaire thermique (14), un dispositif de concentration solaire ou analogue, comportant un deuxième conduit (10) pour la circulation d'un fluide chauffant relié fluidiquement audit premier conduit (2).

3. Système selon la revendication 2, **caractérisé en ce que** lesdits moyens de chauffage (3) comprennent un échangeur de chaleur (11) comportant un circuit primaire (12) relié fluidiquement audit premier conduit (2) et un circuit secondaire (13) relié fluidiquement audit deuxième conduit (10).

4. Système selon la revendication 3, **caractérisé en ce que** ledit échangeur de chaleur (11) est disposé en amont dudit convoyeur (5) par rapport au flux de fluide.

5. Système selon l'une quelconque des revendications précédentes, **caractérisé en ce que** ladite turbine (4) comprend un conduit de transport (40) relié audit premier conduit (2) en amont de ladite roue à aubes (6) et destiné à accélérer le flux entrant dans ladite roue à aubes (6).

6. Système selon la revendication 5, **caractérisé en ce que** ladite turbine (4) comprend un conduit d'accélération (27) joint audit premier conduit (2) en aval de ladite roue à aubes (6) et destiné à accélérer le flux sortant de ladite roue à aubes (6).

7. Système selon l'une quelconque des revendications précédentes, **caractérisé en ce qu'**il comprend une paroi ventilée (22) comportant une structure d'ancrage (23) adaptée pour être fixée à une façade (F) d'un bâtiment et un revêtement (24) fixé à ladite structure d'ancrage (23) à une distance prédéterminée (d) de la façade (F) pour définir avec celle-ci un interstice (25), lequel interstice (25) ayant un bord supérieur (26) au moins partiellement ouvert, ledit premier conduit (2) étant logé dans ou défini par ledit interstice (25).

8. Système selon la revendication 7, **caractérisé en ce que** ledit convoyeur (5) de ladite turbine (4) est en communication fluidique avec ledit interstice (25) pour recevoir un flux d'air montant dans celui-ci et destiné à être envoyé vers ladite roue à aubes (6).

9. Système selon la revendication 8, **caractérisé en ce que** ledit convoyeur (5) est défini par un prolongement de l'extrémité curviligne (17) dudit revêtement (24) qui s'étend au-delà dudit bord supérieur (26) dudit interstice (25).

10. Système selon la revendication 3 en combinaison avec l'une quelconque des revendications précédentes 7 à 9, **caractérisé en ce que** ledit échangeur de chaleur (11) est placé à la base dudit interstice (25) et est éventuellement pourvu d'un ou plusieurs ventilateurs adaptés à forcer la remontée du flux d'air réchauffé vers ledit convoyeur (5).
